# EUROPEAN PATENT APPLICATION

(11) **EP 3 451 185 A1**
(43) Date of publication of application: **06.03.2019**
(21) Application number: 16899903.5
(22) Date of filing: 05.05.2016
(51) Int. Cl.: G06F 17/16

(54) **DEVICE AND METHOD FOR PERFORMING FOUR FUNDAMENTAL OPERATIONS OF ARITHMETIC OF VECTORS**

(30) Priority: 26.04.2016 CN 201610266989
(71) Applicant: Cambricon Technologies Corporation Limited, Beijing 100190 (CN)
(72) Inventor: TAO, Jinhua, Beijing 100190 (CN); ZHI, Tian, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/081107
(87) International publication number: WO 2017/185392

(57) **Abstract**

A device and a method for performing a vector four-fundamental-rule operation are provided, which are configured to perform the vector four-fundamental-rule operation according to a corresponding instruction set. The device includes a storage unit, a register unit, and a vector four-fundamental-rule operation unit. The storage unit is configured to store vectors; the register unit is configured to store addresses of the vectors stored; the vector four-fundamental-rule operation unit is configured to acquire vector addresses from the register unit according to the corresponding instruction set, to acquire vectors from the storage unit according to the vector addresses acquired, and to perform the vector four-fundamental-rule operation on the vectors acquired to obtain a result of the vector four-fundamental-rule operation. According to the disclosure, vector data involved in calculation can be temporarily stored into a scratchpad memory, so that vector data of different widths can be supported more flexibly and effectively in a vector four-fundamental-rule operation process, thereby improving a performance of executing a large number of vector four-fundamental-rule operations.

## Description

### TECHNICAL FIELD

The disclosure relates to a vector four-fundamental-rule operation device and method for efficiently and flexibly performing a vector four-fundamental-rule operation according to a vector four-fundamental-rule operation instruction, which can well solve the problem that more and more algorithms of the current computer field contain a large number of vector four-fundamental-rule operations.

### BACKGROUND

In the current computer field, more and more algorithms are now involving vector operations. Taking machine learning algorithms (i.e., mainstream algorithms of artificial intelligence in popular application fields) as an example, almost all existing classical algorithms of the machine learning algorithms contain a large number of vector four-fundamental-rule operations (in other words, four fundamental rules of arithmetic of vectors). As an example, for two vectors *a* = [*a₁, a₂,..., a*ₙ] and *b* = [*b*₁, *b*₂,..., *b*ₙ], a vector addition operation of the vectors *a* and *b* is defined as *α*+*b*=[*a*₁+*b*₁, *a*₂+*b*₂,..., *a*ₙ+*b*ₙ], a vector subtraction operation of the vectors *a* and *b* is defined as *a-b*=[*a*₁-*b*₁, *a₂-b₂*,..., *a*ₙ-*b*ₙ], a vector multiplication operation of the vectors *a* and *b* is defined as [*a*₁**b*₁, *a*₂**b*₂,..., *a*ₙ**b*ₙ], and a vector division operation of the vectors *a* and *b* is defined as [*a*₁/*b*₁, *a*₂/*b*₂,..., *a*ₙ/*b*ₙ].

In the related art, one solution to conduct a vector four-fundamental-rule operation is to use general-purpose processors by executing general instructions via general-purpose register files and general-purpose functional units to perform a vector four-fundamental-rule operation. However, one defect of the solution is the low operation performance during a vector four-fundamental-rule operation because a single general-purpose processor is primarily used for scalar calculations. On the other hand, adopting multiple general-purpose processors for concurrent execution may lead to a possible performance bottleneck resulting from the intercommunication among the multiple general-purpose processors. In another related art, a vector calculation is conducted by adopting a graphics processing unit (GPU), where general-purpose register files and general-purpose stream processing units are configured to execute general single instruction multiple data (SIMD) instructions, thereby performing a vector four-fundamental-rule operation. Nonetheless, in the above-mentioned solution, GPU's on-chip small cache in performing large-scale vector four-fundamental-rule operations requires a constant transportation of off-chip data, which makes off-chip bandwidth a main performance bottleneck. In another related art, a specialized vector four-fundamental-rule operation device is adopted to perform vector calculations, where customized register files and processing units are used to perform a vector four-fundamental-rule operation. Limited by the register files, however, the present specialized vector four-fundamental-rule operation device is unable to flexibly support four-fundamental-rule operations of vectors of different lengths.

### SUMMARY

### (1)Technical problems to be solved

The disclosure aims to provide a vector four-fundamental-rule operation device and method to solve the problems existing in the related art, such as limited inter-chip communication, insufficient on-chip cache, and inflexible support for different vector lengths.

### (2)Technical solutions

The disclosure provides a vector four-fundamental-rule operation device, which is configured to perform a vector four-fundamental-rule operation according to a vector four-fundamental-rule operation instruction. The device includes a storage unit, a register unit, and a vector four-fundamental-rule operation unit.

The storage unit is configured to store vectors.

The register unit is configured to store vector addresses, where the vector addresses are addresses of the vectors stored in the storage unit.

The vector four-fundamental-rule operation unit is configured to acquire the vector four-fundamental-rule operation instruction, to acquire vector addresses from the register unit according to the vector four-fundamental-rule operation instruction, to acquire vectors from the storage unit according to the vector addresses acquired, and to perform the vector four-fundamental-rule operation on the vectors acquired to obtain a result of the vector four-fundamental-rule operation.

### (3)Advantageous effects

According to the vector four-fundamental-rule operation device and method of the disclosure, vector data involved in calculation can be temporarily stored into a scratchpad memory. In the case of only transmitting a same instruction, data of different widths can be supported more flexibly and effectively in the vector four-fundamental-rule operation unit, and correlation problems in data storing can be solved, therefore an execution performance of a task including a large number of vector calculations can be improved. In addition, an instruction set adopted by the disclosure is convenient to use and flexible in supporting vectors of different lengths.

The disclosure can be applied to the following (including but not limited to) scenarios: a data processing device, a robot, a computer, a printer, a scanner, a telephone, a tablet, a smart terminal, a mobile phone, a driving recorder, a navigator, a sensor, a webcam, a cloud server, a camera, a video camera, a projector, a watch, headphones, a mobile storage, a wearable device, and other electronic products; an airplane, a ship, a car, and other vehicles; a television (TV), an air conditioner, a microwave oven, a refrigerator, an electric cooker, a humidifier, a washing machine, an electric lamp, a gas stove, a hood, and other home appliances; a nuclear magnetic resonance spectrometer, a B-ultrasonic, an electrocardiograph, and other medical equipment.

### BRIEF DESCRIPTION OF THE DRAWINGS

FIG. 1 is a schematic structural diagram illustrating a vector four-fundamental-rule operation device according to an embodiment of the present disclosure.
FIG. 2 is a schematic diagram of the format of an instruction set according to an embodiment of the present disclosure.
FIG. 3 is a schematic structural diagram illustrating a vector four-fundamental-rule operation device according to an embodiment of the present disclosure.
FIG. 4 is a schematic flow diagram illustrating a method for performing a vector four-fundamental-rule operation instruction through a vector four-fundamental-rule operation device according to an embodiment of the present disclosure.
FIG. 5 is a schematic structural diagram illustrating a vector four-fundamental-rule operation unit according to an embodiment of the present disclosure.

### DETAILED DESCRIPTION

The disclosure provides a vector four-fundamental-rule operation device and a corresponding instruction set. The device includes a storage unit, a register unit, and a vector four-fundamental-rule operation unit. The storage unit is configured to store vectors. The register unit is configured to store addresses of the vectors stored. The vector four-fundamental-rule operation unit is configured to acquire vector addresses from the register unit according to a vector four-fundamental-rule operation instruction, to acquire vectors from the storage unit according to the vector addresses acquired, and to perform a vector four-fundamental-rule operation on the vectors acquired to obtain a result of the vector four-fundamental-rule operation. According to the disclosure, vector data involved in calculation can be temporarily stored into a scratchpad memory, so that data of different widths can be supported more flexibly and effectively in a vector four-fundamental-rule operation process, and it is possible to improve an execution performance of a task including a large number of vector calculations.

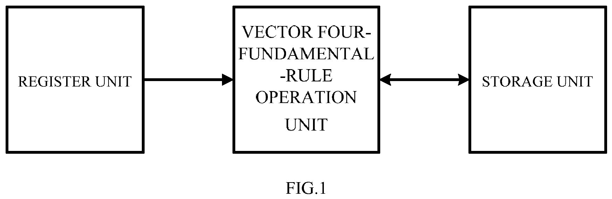

FIG. 1 is a schematic structural diagram illustrating a vector four-fundamental-rule operation device according to an embodiment of the present disclosure. As illustrated in FIG. 1, the device includes a storage unit, a register unit, and a vector four-fundamental-rule operation unit.

The storage unit is configured to store vectors. In one implementation, the storage unit can be a scratchpad memory capable of supporting vector data of different sizes. The disclosure is able to temporarily store required calculation data into a scratchpad memory, to enable the operation device to more flexibly and effectively support data of different widths during vector four-fundamental-rule operations. It may be understood that, the storage unit includes, but is not limited to, a variety of different memory devices, such as a static random access memory (SRAM), an enhanced dynamic random access memory (eDRAM), a dynamic random access memory (DRAM), a memristor, a 3D-DRAM, a non-transitory memory, or the like.

The register unit is configured to store vector addresses, where the vector addresses are addresses of the vectors stored in the storage unit. In one implementation, the register unit can be a scalar register file, to provide scalar registers required for an operation. It should be noted that, the scalar register is configured to store not only vector addresses but also scalar data. When an operation of a vector and a scalar is performed, the vector four-fundamental-rule operation unit acquires not only a vector address but also a corresponding scalar from the register unit. In some implementations, multiple register units are used to form a register file for storing multiple vector addresses and scalars.

The vector four-fundamental-rule operation unit is configured to acquire a vector four-fundamental-rule operation instruction, to acquire vector addresses from the register unit according to the vector four-fundamental-rule operation instruction, to acquire vectors from the storage unit according to the vector addresses acquired, to perform a vector four-fundamental-rule operation on the vectors acquired to obtain a result of the vector four-fundamental-rule operation, and to store the result of the vector four-fundamental-rule operation into the storage unit. In an implementation, the vector four-fundamental-rule operation unit includes a vector addition section, a vector subtraction section, a vector multiplication section, and a vector division section. In another implementation, the vector four-fundamental-rule operation unit has a structure of multiple-stage pipeline, where the vector addition section and the vector subtraction section are arranged in a first stage pipeline, and the vector multiplication section and the vector division section are arranged in a second stage pipeline. Due to the fact that the sections mentioned-above are arranged in different pipeline stages, when sequential order of successive serial multiple vector dot product operation instructions is consistent with sequential order of pipeline stages of corresponding sections, operations as demanded by the serial multiple vector dot product operation instructions can be implemented more efficiently.

According to one implementation of the disclosure, the vector four-fundamental-rule operation device further includes an instruction cache unit. The instruction cache unit is configured to store vector four-fundamental-rule operation instructions to be executed. It should be understood that, one instruction (for example, a vector four-fundamental-rule operation instruction) will be cached in the instruction cache unit while being executed. After execution of an instruction is completed, if the instruction is also the earliest one among instructions that have not been submitted and are in the instruction cache unit, the instruction will be submitted. Once the instruction above is submitted, status change of the device (i.e., the vector four-fundamental-rule operation device) caused by operations performed by the instruction cannot be cancelled. In an implementation, the instruction cache unit can be a reordering cache.

According to one implementation of the disclosure, the vector four-fundamental-rule operation device further includes an instruction processing unit. The instruction processing unit is configured to acquire a vector four-fundamental-rule operation instruction from the instruction cache unit, to process the vector four-fundamental-rule operation instruction acquired, and to provide the vector four-fundamental-rule operation instruction processed for the vector four-fundamental-rule operation unit. In an implementation, the instruction processing unit includes an instruction fetching module, a decoding module, and an instruction queue.

The instruction fetching module is configured to acquire the vector four-fundamental-rule operation instruction from the instruction cache unit.

The decoding module is configured to decode the vector four-fundamental-rule operation instruction acquired from the instruction cache unit.

The instruction queue is configured to sequentially store the vector four-fundamental-rule operation instruction decoded, and, considering that different instructions may have dependency relationships on registers included, to cache the vector four-fundamental-rule operation instruction decoded and then to send the vector four-fundamental-rule operation instruction cached when a dependency relationship is eliminated.

According to one implementation of the disclosure, the vector four-fundamental-rule operation device further includes a dependency relationship processing unit. The dependency relationship processing unit is configured to: determine whether the vector four-fundamental-rule operation instruction accesses the same vector as a previous vector four-fundamental-rule operation instruction (in other words, determine whether the vector four-fundamental-rule operation instruction and a previous vector four-fundamental-rule operation instruction access a same vector), before the vector four-fundamental-rule operation unit acquires the vector four-fundamental-rule operation instruction; and store the vector four-fundamental-rule operation instruction into a storage queue based on a determination that the vector four-fundamental-rule operation instruction accesses the same vector as the previous vector four-fundamental-rule operation instruction, and provide the vector four-fundamental-rule operation instruction in the storage queue for the vector four-fundamental-rule operation unit after execution of the previous vector four-fundamental-rule operation instruction is completed; or provide the vector four-fundamental-rule operation instruction for the vector four-fundamental-rule operation unit directly, based on a determination that the vector four-fundamental-rule operation instruction does not access the same vector as the previous vector four-fundamental-rule operation instruction. As an example, when the vector four-fundamental-rule operation instruction (i.e., a current vector four-fundamental-rule operation instruction) accesses a scratchpad memory, the previous vector four-fundamental-rule operation instruction and the vector four-fundamental-rule operation instruction may access a same memory space. In order to ensure the correctness of an execution result of the vector four-fundamental-rule operation instruction, if data of the current vector four-fundamental-rule operation instruction is detected to have a dependency relationship with data of the previous vector four-fundamental-rule operation instruction, the vector four-fundamental-rule operation instruction must wait within the storage queue until the dependency relationship is eliminated.

According to one implementation of the disclosure, the vector four-fundamental-rule operation device further includes an input/output (I/O) unit. The I/O unit is configured to store the vectors into the storage unit, or to acquire the result of the vector four-fundamental-rule operation from the storage unit. In an implementation, the I/O unit can be a direct storage unit and responsible for reading vector data from or writing vector data into the memory.

The disclosure further provides a vector four-fundamental-rule operation method, which is configured to perform a vector four-fundamental-rule operation according to a vector four-fundamental-rule operation instruction. The method includes the following operations.

At S1, vectors are stored.

At S2, vector addresses (i.e., addresses of the vectors stored) are stored, and the vector addresses indicate positions of the vectors stored of the operation S1.

At S3, the vector four-fundamental-rule operation instruction is acquired, vector addresses are acquired according to the vector four-fundamental-rule operation instruction, vectors are acquired according to the vector addresses acquired, and the vector four-fundamental-rule operation is performed on the vectors acquired to obtain a result of the vector four-fundamental-rule operation.

According to one implementation of the disclosure, the method further includes the follows prior to the operation S3.

Vector four-fundamental-rule operation instructions are stored.

A vector four-fundamental-rule operation instruction is acquired from the vector four-fundamental-rule operation instructions stored.

The vector four-fundamental-rule operation instruction acquired is decoded.

The vector four-fundamental-rule operation instruction decoded is sequentially stored.

According to one implementation of the disclosure, the method further includes the follows prior to the operation S3.

Whether the vector four-fundamental-rule operation instruction accesses the same vector as a previous vector four-fundamental-rule operation instruction is determined (in other words, whether the vector four-fundamental-rule operation instruction and a previous vector four-fundamental-rule operation instruction access a same vector is determined). When the vector four-fundamental-rule operation instruction accesses the same vector as the previous vector four-fundamental-rule operation instruction, store the vector four-fundamental-rule operation instruction into a storage queue, and advance to the operation S3 after execution of the previous vector four-fundamental-rule operation instruction is completed; otherwise, advance to the operation S3 directly.

According to one implementation of the disclosure, the method further includes an operation of storing the result of the vector four-fundamental-rule operation.

According to one implementation of the disclosure, the operation S1 includes an operation of storing the vectors into a scratchpad memory.

According to one implementation of the disclosure, the vector four-fundamental-rule operation instruction includes an operation code and at least one operation field, where the operation code is configured to indicate a function of the vector four-fundamental-rule operation instruction, and the operation field is configured to indicate data information of the vector four-fundamental-rule operation instruction.

According to one implementation of the disclosure, the vector four-fundamental-rule operation includes an addition operation, a subtraction operation, a multiplication operation and a division operation.

According to one implementation of the disclosure, a vector four-fundamental-rule operation unit has a structure of multiple-stage pipeline, and the structure of multiple-stage pipeline includes a first stage pipeline and a second stage pipeline. In an implementation, the vector addition operation and the vector subtraction operation are performed at the first stage pipeline, and the vector multiplication operation and the vector division operation are performed at the second stage pipeline.

According to one implementation of the disclosure, the instruction set adopts fixed length instructions.

In the process of performing a vector four-fundamental-rule operation, the vector four-fundamental-rule operation device fetches a vector four-fundamental-rule operation instruction for decoding, and then sends the vector four-fundamental-rule operation instruction decoded to the instruction queue for storing. The vector four-fundamental-rule operation device acquires parameters of the vector four-fundamental-rule operation instruction stored according to a decoding result. In an implementation, the parameters can be parameters which are directly written in an operation field of the vector four-fundamental-rule operation instruction, or can be parameters which are read from a specified register according to a register number of the operation field of the vector four-fundamental-rule operation instruction. One advantage of using a register to store the parameters is that there is no need to change the vector four-fundamental-rule operation instruction itself. As long as values of the register are changed by the vector four-fundamental-rule operation instruction, most of loops can be realized, which greatly saves the number of instructions required to solve some practical problems. After all the parameters for operating are acquired, whether the vector four-fundamental-rule operation instruction is immediately sent to the vector four-fundamental-rule operation unit can be determined according to a result determined by the dependency relationship processing unit (i.e., "data required by the vector four-fundamental-rule operation instruction has a dependency relationship with data required by the previous vector four-fundamental-rule operation instruction" or "data required by the vector four-fundamental-rule operation instruction does not have a dependency relationship with data required by the previous vector four-fundamental-rule operation instruction"). Once a dependency relationship is found between data of the vector four-fundamental-rule operation instruction and data of the previous vector four-fundamental-rule operation instruction, the vector four-fundamental-rule operation instruction must wait until execution of the depended previous vector four-fundamental-rule operation instruction is completed, and then the vector four-fundamental-rule operation instruction can be sent to the vector four-fundamental-rule operation unit for execution. In a specialized operation unit, the vector four-fundamental-rule operation instruction will be executed quickly, and a result (i.e., a result of a vector four-fundamental-rule operation) is written back to an address provided by the vector four-fundamental-rule operation instruction. In this situation, the execution of the vector four-fundamental-rule operation instruction is completed.

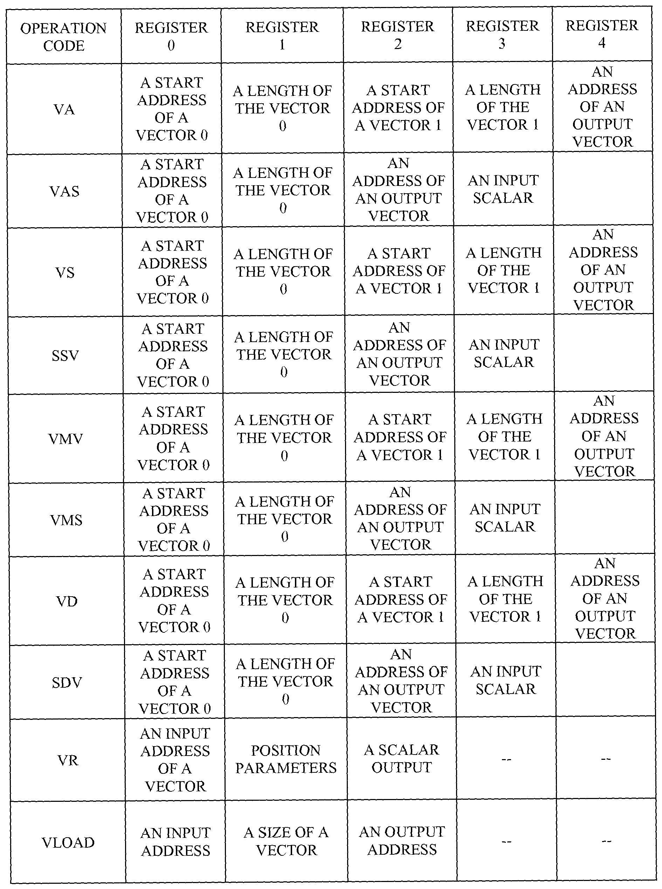

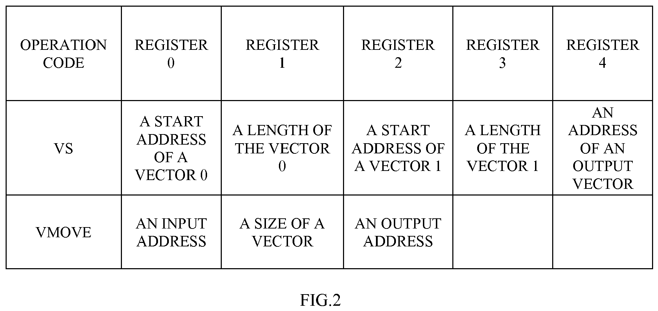

FIG. 2 is a schematic diagram of the format of an instruction set according to an embodiment of the present disclosure. As illustrated in FIG. 2, a vector four-fundamental-rule operation instruction includes an operation code and a plurality of operation fields. The operation code is configured to indicate a function of the vector four-fundamental-rule operation instruction, where the function may be an addition function, a subtraction function, a multiplication function, or a division function. That is, a vector four-fundamental-rule operation unit can perform a vector four-fundamental-rule operation by identifying the operation code. The operation field is configured to indicate data information of the vector four-fundamental-rule operation instruction, where the data information can be immediate data or a register number (in other words, a register unit number). For example, to acquire a vector, a start address and a length of the vector can be obtained from a register according to a register number, and then the vector stored in a corresponding address can be obtained from the storage unit according to the start address and the length of the vector.

The instruction set contains vector four-fundamental-rule operation instructions different in functions. The vector four-fundamental-rule operation instruction includes, but is not limited to, a vector addition (VA) instruction, a vector-add-scalar (VAS) instruction, a vector subtraction (VS) instruction, a scalar-subtract-vector (SSV) instruction, a vector-multiply-vector (VMV) instruction, a vector-multiply-scalar (VMS) instruction, a vector division (VD) instruction, a scalar-divide-vector (SDV) instruction, a vector retrieval (VR) instruction, a vector load (VLOAD) instruction, a vector storage (VS) instruction, and a vector movement (VMOVE) instruction.

For the vector addition (VA) instruction, a device (for example, the device can be a vector four-fundamental-rule operation device) is configured to respectively retrieve two blocks of vector data of a specified size from specified addresses of a scratchpad memory. Then an addition operation is performed on the two blocks of vector data in a vector operation unit. Finally, a result is written back into a specified address of the scratchpad memory.

For the vector-add-scalar (VAS) instruction, a device is configured to retrieve vector data of a specified size from a specified address of a scratchpad memory and scalar data from a specified address of a scalar register file. Then, in a scalar operation unit, a value of a scalar is added to each element of a vector. Finally, a result is written back into a specified address of the scratchpad memory.

For the vector subtraction (VS) instruction, a device is configured to respectively retrieve two blocks of vector data of a specified size from specified addresses of a scratchpad memory. Then a subtraction operation is performed on the two blocks of vector data in a vector operation unit. Finally, a result is written back into a specified address of the scratchpad memory.

For the scalar-subtract-vector (SSV) instruction, a device is configured to retrieve scalar data from a specified address of a scalar register file and vector data from a specified address of a scratchpad memory. Then, in a vector operation unit, subtract corresponding elements of a vector with a scalar. Finally, a result is written back into a specified address of the scratchpad memory.

For the vector-multiply-vector (VMV) instruction, a device is configured to respectively retrieve two blocks of vector data of a specified size from specified addresses of a scratchpad memory. Then, in a vector operation unit, a contrapuntal multiplication operation is performed on the two blocks of vector data. Finally, a result is written back into a specified address of the scratchpad memory.

For the vector-multiply-scalar (VMS) instruction, a device is configured to retrieve vector data of a specified size from a specified address of a scratchpad memory and scalar data of a specified size from a specified address of a scalar register file. Then a vector-multiply-scalar operation is performed (that is, a vector is multiplied by a scalar) in a vector operation unit. Finally, a result is written back into a specified address of the scratchpad memory.

For the vector division (VD) instruction, a device is configured to respectively retrieve two blocks of vector data of a specified size from specified addresses of a scratchpad memory. Then, in a vector operation unit, a contrapuntal division operation is performed on the two blocks of vector data. Finally, a result is written back into a specified address of the scratchpad memory.

For the scalar-divide-vector (SDV) instruction, a device is configured to retrieve scalar data from a specified address of a scalar register file and vector data of a specified size from a specified address of a scratchpad memory. Then, in a vector operation unit, divide a scalar by corresponding elements of a vector. Finally, a result is written back into a specified address of the scratchpad memory.

For the vector retrieval (VR) instruction, a device is configured to retrieve a vector of a specified size from a specified address of a scratchpad memory. Then, in a vector operation unit, an element of a vector is extracted according to a specified position to serve as an output. Finally, a result is written back into a specified address of a scalar register file.

For the vector load (VLOAD) instruction, a device is configured to load vector data of a specified size from a specified external source address to a specified address of a scratchpad memory.

For the vector storage (VS) instruction, a device is configured to store vector data of a specified size from a specified address of a scratchpad memory into an external destination address.

For the vector movement (VMOVE) instruction, a device is configured to store (in other words, move) vector data of a specified size from a specified address of a scratchpad memory into another specified address of the scratchpad memory.

To illustrate objects, technical solutions, and advantageous effects of the disclosure more clearly, the disclosure will be further described in detail below with reference to specific embodiments of the disclosure and accompanying drawings.

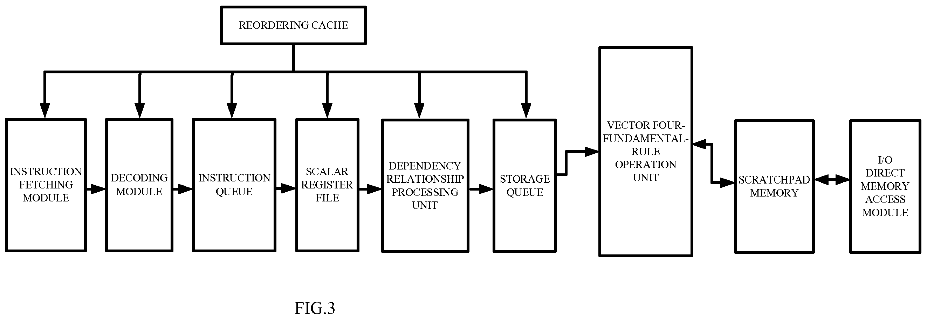

FIG. 3 is a schematic structural diagram illustrating a vector four-fundamental-rule operation device according to an embodiment of the present disclosure. As illustrated in FIG. 3, the vector four-fundamental-rule operation device includes an instruction fetching module, a decoding module, an instruction queue, a scalar register file, a dependency relationship processing unit, a storage queue, a reordering cache, a vector four-fundamental-rule operation unit, a scratchpad memory, and an input/output (I/O) direct memory access module.

The instruction fetching module is configured to fetch a next instruction (i.e., a vector four-fundamental-rule operation instruction) to be executed from an instruction sequence, and to transmit the instruction fetched to the decoding module.

The decoding module is configured to decode the instruction transmitted, and to transmit the instruction decoded to the instruction queue.

Considering that different instructions may have dependency relationships on scalar registers included, the instruction queue is configured to cache the instruction decoded, and to transmit the instruction cached when a dependency relationship is eliminated.

The scalar register file is configured to provide scalar registers required by the vector four-fundamental-rule operation device during an operation.

For the dependency relationship processing unit, a vector four-fundamental-rule operation instruction (also known as a current instruction) processed by the dependency relationship processing unit may have a dependency relationship with a previous vector four-fundamental-rule operation instruction (also known as a previous instruction). When the vector four-fundamental-rule operation instruction accesses a scratchpad memory, the previous vector four-fundamental-rule operation instruction and the vector four-fundamental-rule operation instruction may access a same memory space. In order to ensure the correctness of an execution result of the vector four-fundamental-rule operation instruction, if data of the current vector four-fundamental-rule operation instruction is detected to have a dependency relationship with data of the previous vector four-fundamental-rule operation instruction, the current instruction must wait within the storage queue until the dependency relationship is eliminated.

The storage queue is a sequential queue, when the data of the vector four-fundamental-rule operation instruction has a dependency relationship with the data of the previous vector four-fundamental-rule operation instruction, the vector four-fundamental-rule operation instruction will be stored in the sequential queue until the dependency relationship is eliminated.

For the reordering cache, the vector four-fundamental-rule operation instruction is cached in the reordering cache while being executed. After execution of a vector four-fundamental-rule operation instruction is completed, if the vector four-fundamental-rule operation instruction is also the earliest one among instructions that have not been submitted and are in the reordering cache, the vector four-fundamental-rule operation instruction will be submitted. Once the vector four-fundamental-rule operation instruction is submitted, status change of the vector four-fundamental-rule operation device caused by operations performed by the vector four-fundamental-rule operation instruction cannot be cancelled.

The vector four-fundamental-rule operation unit is responsible for all vector four-fundamental-rule operations of the vector four-fundamental-rule operation device, and the vector four-fundamental-rule operation instruction is sent to the vector four-fundamental-rule operation unit for execution.

The scratchpad memory is a temporary storage device dedicated to vector data, and can support vector data of different sizes.

The I/O direct memory access module is configured to directly access the scratchpad memory and responsible for reading data from or writing data into the scratchpad memory.

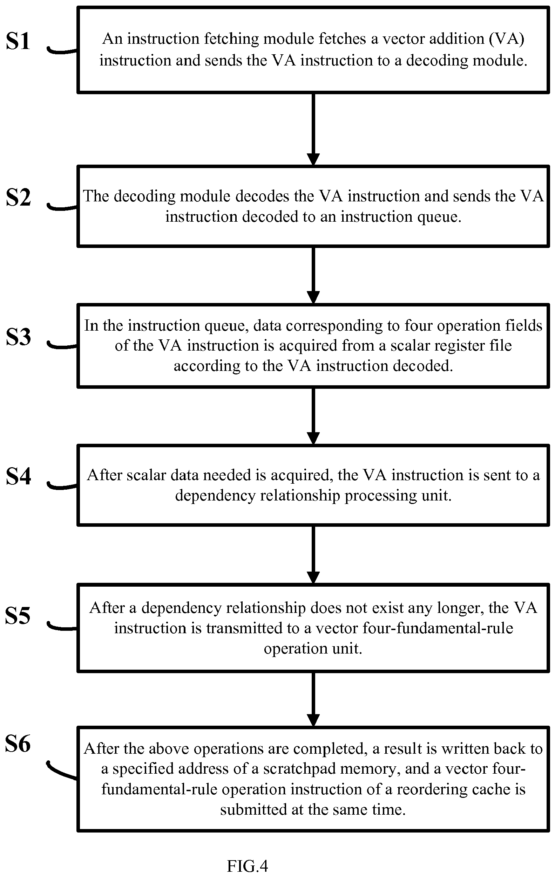

FIG. 4 is a schematic flow diagram illustrating a method for performing a vector four-fundamental-rule operation instruction through a vector four-fundamental-rule operation device according to an embodiment of the present disclosure. As illustrated in FIG. 4, a manner of performing a vector addition (VA) instruction is as follows.

At S1, an instruction fetching module fetches the vector addition (VA) instruction, and sends the VA instruction to a decoding module.

At S2, the decoding module decodes the VA instruction, and sends the VA instruction decoded to an instruction queue.

At S3, in the instruction queue, data corresponding to four operation fields of the VA instruction is acquired from a scalar register file according to the VA instruction decoded. In an implementation, the data acquired from the scalar register file includes a start address of a vector *vin*₀*,* a length of the vector *vin*₀*,* a start address of a vector *vin*₁*,* and a length of the vector *vin*₁*.*

At S4, after scalar data needed is acquired, the VA instruction is sent to a dependency relationship processing unit. The dependency relationship processing unit analyzes whether there is a dependency relationship between data of the VA instruction and data of an uncompleted previous vector addition (VA) instruction. The VA instruction needs to wait (in other words, the VA instruction is cached) in a storage queue until there is no dependency relationship between the data of the VA instruction and the data of the uncompleted previous VA instruction.

At S5, after the dependency relationship between the data of the VA instruction and the data of the uncompleted previous VA instruction does not exist any longer, the VA instruction is transmitted to a vector four-fundamental-rule operation unit. The vector four-fundamental-rule operation unit retrieves needed vectors from a scratchpad memory according to addresses and lengths of needed data, and then a vector addition operation is performed in the vector four-fundamental-rule operation unit.

At S6, after the above operations are completed, a result is written back to a specified address of the scratchpad memory, and the vector four-fundamental-rule operation instruction (i.e., the VA instruction) of a reordering cache is submitted at the same time.

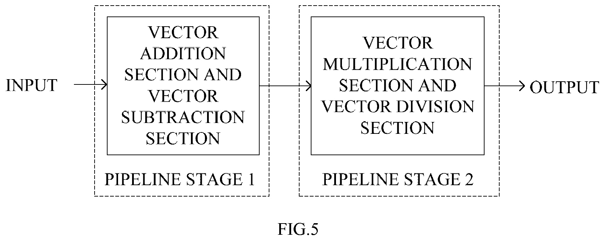

FIG. 5 is a schematic structural diagram illustrating a vector four-fundamental-rule operation unit according to an embodiment of the present disclosure. As illustrated in FIG. 5, the vector four-fundamental-rule operation unit includes vector four-fundamental-rule operation subunits (for example, a vector addition section, a vector subtraction section, a vector multiplication section, and a vector division section).

In an implementation, the vector four-fundamental-rule operation unit has a structure of multiple-stage pipeline, where a vector addition section and a vector subtraction section are arranged at a pipeline stage 1, and a vector multiplication section and a vector division section are arranged at a pipeline stage 2. Since these sections are arranged in different pipeline stages, when sequential order of successive serial multiple vector four-fundamental-rule operations is consistent with sequential order of pipeline stages of corresponding sections, operations as demanded by the series of vector four-fundamental-rule operation instructions can be achieved more effectively.

Although the objects, technical solutions and advantageous effects of the present disclosure has been described in detail according to certain embodiments, it should be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A vector four-fundamental-rule operation device, configured to perform a vector four-fundamental-rule operation according to a vector four-fundamental-rule operation instruction, the device comprising:
a storage unit, configured to store vectors;
a register unit, configured to store vector addresses, wherein the vector addresses are addresses of the vectors stored in the storage unit; and
a vector four-fundamental-rule operation unit, configured to acquire the vector four-fundamental-rule operation instruction, to acquire vector addresses from the register unit according to the vector four-fundamental-rule operation instruction, to acquire vectors from the storage unit according to the vector addresses acquired, and to perform the vector four-fundamental-rule operation on the vectors acquired to obtain a result of the vector four-fundamental-rule operation.

2. The device of claim 1, further comprising:
an instruction cache unit, configured to store vector four-fundamental-rule operation instructions to be executed.

3. The device of claim 2, further comprising:
an instruction processing unit, configured to acquire a vector four-fundamental-rule operation instruction from the instruction cache unit, to process the vector four-fundamental-rule operation instruction acquired from the instruction cache unit, and to provide the vector four-fundamental-rule operation instruction processed for the vector four-fundamental-rule operation unit.

4. The device of claim 3, wherein the instruction processing unit comprises:
an instruction fetching module, configured to acquire the vector four-fundamental-rule operation instruction from the instruction cache unit;
a decoding module, configured to decode the vector four-fundamental-rule operation instruction acquired from the instruction cache unit; and
an instruction queue, configured to sequentially store the vector four-fundamental-rule operation instruction decoded.

5. The device of claim 1, further comprising a dependency relationship processing unit configured to:
determine whether the vector four-fundamental-rule operation instruction accesses the same vector as a previous vector four-fundamental-rule operation instruction, before the vector four-fundamental-rule operation unit acquires the vector four-fundamental-rule operation instruction; and
store the vector four-fundamental-rule operation instruction into a storage queue based on a determination that the vector four-fundamental-rule operation instruction accesses the same vector as the previous vector four-fundamental-rule operation instruction, and provide the vector four-fundamental-rule operation instruction in the storage queue for the vector four-fundamental-rule operation unit after execution of the previous vector four-fundamental-rule operation instruction is completed; or
provide the vector four-fundamental-rule operation instruction for the vector four-fundamental-rule operation unit directly, based on a determination that the vector four-fundamental-rule operation instruction does not access the same vector as the previous vector four-fundamental-rule operation instruction.

6. The device of claim 1, wherein the storage unit is further configured to store the result of the vector four-fundamental-rule operation.

7. The device of claim 6, further comprising:
an input/output (I/O) unit, configured to store the vectors into the storage unit, or to acquire the result of the vector four-fundamental-rule operation from the storage unit.

8. The device of claim 1, wherein the storage unit is a scratchpad memory.

9. The device of claim 1, wherein the vector four-fundamental-rule operation instruction comprises:
an operation code; and
at least one operation field;
wherein the operation code is configured to indicate a function of the vector four-fundamental-rule operation instruction; and
wherein the operation field is configured to indicate data information of the vector four-fundamental-rule operation instruction.

10. The device of claim 9, wherein the data information comprises a register unit number, and the vector four-fundamental-rule operation unit is configured to access a register unit and to acquire a vector address according to the register unit number.

11. The device of claim 1, wherein the vector four-fundamental-rule operation unit comprises a vector addition section, a vector subtraction section, a vector multiplication section, and a vector division section.

12. The device of claim 11, wherein the vector four-fundamental-rule operation unit has a structure of multiple-stage pipeline, and the structure of multiple-stage pipeline comprises a first stage pipeline and a second stage pipeline; wherein the vector addition section and the vector subtraction section are arranged in the first stage pipeline, and the vector multiplication section and the vector division section are arranged in the second stage pipeline.

13. A vector four-fundamental-rule operation method, configured to perform a vector four-fundamental-rule operation according to a vector four-fundamental-rule operation instruction, the method comprising:
S1, storing vectors;
S2, storing vector addresses; and
S3, acquiring the vector four-fundamental-rule operation instruction, acquiring vector addresses according to the vector four-fundamental-rule operation instruction, acquiring vectors according to the vector addresses acquired, and performing the vector four-fundamental-rule operation on the vectors acquired to obtain a result of the vector four-fundamental-rule operation.

14. The method of claim 13, further comprising the follows prior to the operation S3:
storing vector four-fundamental-rule operation instructions;
acquiring a vector four-fundamental-rule operation instruction from the vector four-fundamental-rule operation instructions stored;
decoding the vector four-fundamental-rule operation instruction acquired; and
sequentially storing the vector four-fundamental-rule operation instruction decoded.

15. The method of claim 13, further comprising the follows prior to the operation S3:
determining whether the vector four-fundamental-rule operation instruction accesses the same vector as a previous vector four-fundamental-rule operation instruction; and
storing the vector four-fundamental-rule operation instruction into a storage queue based on a determination that the vector four-fundamental-rule operation instruction accesses the same vector as the previous vector four-fundamental-rule operation instruction, and advancing to the operation S3 after execution of the previous vector four-fundamental-rule operation instruction is completed; or
advancing to the operation S3 directly, based on a determination that the vector four-fundamental-rule operation instruction does not access the same vector as the previous vector four-fundamental-rule operation instruction.

16. The method of claim 13, further comprising:
storing the result of the vector four-fundamental-rule operation.

17. The method of claim 13, wherein the operation S1 comprises:
storing the vectors into a scratchpad memory.

18. The method of claim 13, wherein the vector four-fundamental-rule operation instruction comprises an operation code and at least one operation field; wherein the operation code is configured to indicate a function of the vector four-fundamental-rule operation instruction, and the operation field is configured to indicate data information of the vector four-fundamental-rule operation instruction.

19. The method of claim 13, wherein the vector four-fundamental-rule operation comprises a vector addition operation, a vector subtraction operation, a vector multiplication operation, and a vector division operation.

20. The method of claim 19, wherein a vector four-fundamental-rule operation unit has a structure of multiple-stage pipeline, and the structure of multiple-stage pipeline comprises a first stage pipeline and a second stage pipeline; wherein the vector addition operation and the vector subtraction operation are performed at the first stage pipeline, the vector multiplication operation and the vector division operation are performed at the second stage pipeline.
